# EUROPÄISCHE PATENTSCHRIFT

(11) **EP 2 860 225 B1**
(45) Veröffentlichungstag und Bekanntmachung des Hinweises auf die Patenterteilung: **07.12.2016**
(21) Anmeldenummer: 14188384.3
(22) Anmeldetag: 10.10.2014
(51) Int. Cl.: C08L 95/00

(54) **ADDITIV FÜR STRAßENBAU-MISCHGUT**
ADDITIVE FOR MIXED ROAD CONSTRUCTION MATERIAL
ADDITIF POUR PRODUIT DE MÉLANGE POUR CONSTRUCTION ROUTIÈRE

(30) Priorität: 10.10.2013 DE 102013016862
(43) Veröffentlichungstag der Anmeldung: 15.04.2015
(73) Patentinhaber: J. Rettenmaier & Söhne GmbH + Co. KG, 73494 Rosenberg (DE)
(72) Erfinder: Güntner, Roland, 73479 Ellwangen (DE); Brendle, Hans-Georg, 73479 Ellwangen (DE); Wettinger, Michael, 73489 Jagstzell (DE)
(74) Vertreter: Dr. Weitzel & Partner

(56) Entgegenhaltungen:
- WO-A1-2011/027926
- KR-A- 20090 129 546
- KR-B1- 100 935 465
- US-A1- 2011 196 073
- JIAN-SHIUH CHEN ET AL: "Mechanism and behavior of bitumen strength reinforcement using fibers", JOURNAL OF MATERIALS SCIENCE, KLUWER ACADEMIC PUBLISHERS, BO, Bd. 40, Nr. 1, 1. Januar 2005 (2005-01-01) , Seiten 87-95, XP019210301, ISSN: 1573-4803, DOI: 10.1007/S10853-005-5691-4
- CAO ET AL: "Study on properties of recycled tire rubber modified asphalt mixtures using dry process", CONSTRUCTION AND BUILDING MATERIALS, ELSEVIER, NETHERLANDS, Bd. 21, Nr. 5, 12. Dezember 2006 (2006-12-12), Seiten 1011-1015, XP005882897, ISSN: 0950-0618
- EDWARDS Y ET AL: "Influence of commercial waxes and polyphosphoric acid on bitumen and asphalt concrete performance at low and medium temperatures", MATERIALS AND STRUCTURES, KLUWER ACADEMIC PUBLISHERS, DO, Bd. 39, Nr. 7, 16. Juni 2006 (2006-06-16), Seiten 723-735, XP019415549, ISSN: 1871-6873, DOI: 10.1617/S11527-006-9134-8
- ESTEVEZ ET AL: "Use of coupling agents to stabilize asphalt-rubber-gravel composite to improve its mechanical properties", JOURNAL OF CLEANER PRODUCTION, ELSEVIER, NL, Bd. 17, Nr. 15, 1. Oktober 2009 (2009-10-01), Seiten 1359-1362, XP026351197, ISSN: 0959-6526 [gefunden am 2009-05-23]
- WOODSIDE ET AL: "POLYMER MODIFIED CELLULOSE PELLET FIBRE IN BITUMINOUS MIXTURES", PROCEEDINGS OF THE PAPERS SUBMITTED FOR REVIEW AT 2ND EURASPHALT AND EUROBITUME CONGRESS, HELD 20-22 SEPTEMBER 2000, BARCELONA, SPAIN. BOOK 2 - SESSION 2,, 20. September 2000 (2000-09-20), Seiten 674-677, XP009182633, ISBN: 90-802884-3-8

## Beschreibung

Die Erfindung betrifft ein Additiv zum Zugeben zu Bitumenmasse für die Verwendung bei Bitumendachbahnen, Bitumendichtungsmassen, Straßenbeläge aus Asphalt usw.

An solche Straßenbeläge werden immer höhere Anforderungen gestellt. Dies geht zurück auf ein steigendes Verkehrsaufkommen sowie auf den Klimawandel. Der Belag muss hitze- und kältebeständig sein. Er soll sich nicht verformen. So soll er bei Hitze keine Spurrinnen bilden, und bei Kälte keine Risse. Hierzu werden Additive der verschiedensten Arten verwendet, insbesondere Polymere. Aber auch Bindemitteleigenschaften wie die Klebrigkeit usw. sollen durch die Additivierung des Grundbitumens verbessert werden.

Im so genannten Nassverfahren werden im Allgemeinen derartige Additive vor der Herstellung des Asphaltes homogen dem Bindemittel, nämlich Bitumen, zugeführt, in dieses eingemischt, und während des Herstellens des Asphalts diesem zugegeben. Da derartig modifizierte Bitumina teilweise, abhängig vom eingesetzten Additiv, nur begrenzt oder nur unter ständigem Rühren lagerstabil sind, ist aber auch das so genannte Trockenverfahren bekannt. Beim Trockenverfahren werden die Additive direkt in den Mischer des Asphaltmischwerkes unmittelbar bei Herstellung des Asphaltes zugegeben. Dafür ist es notwendig, dass so zugegebene Feststoffe möglichst automatisch über Big Bag-Stationen oder Silos dosiert werden können. Sie müssen also rieselfähig sein und dürfen nicht zur Verklumpung neigen.

Als Bitumen modifizierende Additive dienen beispielsweise Elastomere wie StyrolButadien-Styrol (SBS) oder Plastomere wie Ethylenvinylacetat (EVA). Sie dienen insbesondere der Formbeständigkeit bei hohen Temperaturen. Der Preis solcher Additive ist hoch. Deswegen hat man in der Vergangenheit immer wieder versucht, Altgummi, in der Regel in Gestalt von zerkleinerten Altreifen zu verwenden, da Gummi elastische und damit SBS-ähnliche Eigenschaften aufweist. Dabei werden die Reifen auf jegliche Weise zu Krümeln oder Körnern zerkleinert.

Bei Straßenbelägen der genannten Art haben sich immer wieder zwei Probleme als besonders gravierend gezeigt:
Zum einen das Entstehen von Spurrinnen bei heißen Sommern, sowie das Entstehen von Rissen im Winter. Es gibt eine Vielzahl von Druckschriften, in denen die beiden Probleme behandelt werden.

Gemäß EP 1 873 212 B1 wird Gummipulver modifiziert durch Quellung mit aromatischen Ölen. Das anschließende Modifizieren von Bitumen wird in einem Nassverfahren durchgeführt.

Gemäß WO 94/14896 werden Gummipartikel aus Altreifen durch Erhitzen und Scheren mittels eines Öls gequollen und depolymerisiert. Dieses Material wird in Bitumen dispergiert. Es wird mit Füllern und Polymeren zu einem Pellet geformt.

Gemäß US 2010/0056669 A1 wird ein lagerstabiles Pellet für die Asphaltherstellung erzeugt.

Gemäß DE 102010 026 950 A1 werden Gummipartikel mit einem Öl gequollen und mit viskositätsreduzierendem Wachs und optionalen adhäsionsverbessernden Stoffen agglomeriert.

WO 2012/010150 beschreibt die Herstellung eines gummibasierten Materials durch Quellung mit Mineralölen. Cellulosefasern sind nur am Rande erwähnt - Seite 29, Zeile 15 bis 20. Dort ist davon die Rede, dass wachshaltige Gummipartikel "mit einem pneumatischen System ... gefördert" werden. Weiterhin heißt es, dass das pneumatische Fördersystem für die Zugabe von Cellulosefaserpellets verwendet wird. Schließlich heißt es jedoch, dass "bei der Verwendung von Gummi keine Cellulose ... benötigt" wird. Damit wird somit von einer gemeinsamen Verwendung von Wachs und Cellulose abgeraten.

EP 0 313 603 B1 beschreibt ein Granulat mit Füllfasern. Das Granulat wird in Bitumenmasse eingemischt.

DE 196 01 285 A1 beschreibt ein Granulat zum Zugeben zu einer Asphaltmischung. Das Granulat umfasst ein polymeres Material (oder Bitumen) sowie Gummi und Cellulosefasern ohne Angabe eines Prozentsatzes.

US 5 460 649 beschreibt eine faserverstärkte Gummi-Asphalt-Betonmischung als Straßenbelag. Als Fasern dienen antistatisch behandelte Polyesterfasern.

US 2002/0108534 A1 beschreibt ein Asphaltprodukt, das unter anderem Kunststoffe, Schweröle, Fettsäuren und Fasern enthält. Über die Art und den Anteil der Fasern ist nichts ausgesagt.

Gleichwohl sind die Ergebnisse immer noch verbesserungsbedürftig. Die beschriebenen Herstellverfahren sind entweder sehr aufwändig und damit kostenintensiv oder sie führen zu Produkten, welche keine optimale Bitumenmodifizierung erlauben.

Hinzu kommen folgende Nachteile:
(1) Geschredderter Gummi geht nur schwer eine Verbindung mit Bitumen ein. Viele der vorgeschlagenen Verfahren sind nicht in der Lage, Gummi so zu aktivieren, dass es die gewünschte bitumenmodifizierende Wirkung im erforderlichen Maß ausüben kann usw.
(2) Geschredderter Gummi neigt zum Verkleben. Dies ist besonders nachteilig bezüglich seiner Dosierbarkeit.
(3) Bei physikalischen Mischungen aus Gummi und gewissen Zusätzen wie Polyoctenamer besteht bei der Zugabe an der Mischanlage die Gefahr des Entmischens, da Partikelgröße und/oder Dichte der Einzelkomponenten unterschiedlich sind.
(4) Das Additiv ist nur ungenügend dispergierfähig im Straßenbau-Mischgut.
(5) Um eine ordentliche Dispergierbarkeit und homogene Verteilung der Additive im Straßenbau-Mischgut zu garantieren, bevorzugt man bei der Herstellung häufig eine zusätzliche Trockenvormischzeit. Dies hat zur Folge, dass die Additive zuerst mit den heißen Mineralstoffen mit hohen Scherkräften vor der Bitumenzugabe zeitaufwändig vorgemischt werden müssen.
(6) Um die elastischen und damit SBS-ähnlichen Eigenschaften des Gummis auf bituminöse Massen übertragen zu können, ist es oft notwendig, nach Herstellung z.B. eines Straßenbau-Mischgutes dieses zeitaufwändig für mind. 1 h in Silos bei hohen Temperaturen zwischenzulagern. Erst nach dieser Reaktionszeit bzw. Nachreifezeit erhält man die notwendige Bitumen- bzw. Asphaltqualität.
(7) Auch Umwelt-Gesichtspunkte sind nicht optimal gelöst, vor allem der Energiebedarf.

Darüber hinaus gibt es Fälle, in denen es sinnvoll oder notwendig, ja teilweise durch entsprechende technische Lieferbedingungen / Spezifikationen vorgeschrieben ist, dem Mischgut zusätzlich sogenannte "stabilisierende Zusätze" hinzuzufügen. Diese Zusätze wirken als Verarbeitungshilfsmittel und sind insbesondere bei hohen Bitumengehalten notwendig, um eine Entmischung des Mischguts durch das sog. Ablaufen des Bindemittels zu verhindern. Auch Gummipartikel weisen im gewissen Maße einen stabilisierenden Effekt auf, jedoch ist dieser weit weniger stark ausgeprägt und wird in der weiteren Beschreibung als stabilisierender Zusatz ausgeschlossen. Cellulosefasern sind die am häufigsten eingesetzten stabilisierenden Zusätze und es können durch deren stabilisierende Wirkung geforderte hohe Bitumengehalte schadlos in der Asphaltmischung untergebracht werden. Ein Ablaufen des Bitumens vom Gestein nach dem Mischprozess wird verhindert und man erhält dadurch dickere Bindemittelfilme. Diese sind weniger empfindlich gegenüber möglichen Oxidationsprozessen und können eine erhöhte Nutzungsdauer des Asphaltes nach sich ziehen [Dr.V.Hirsch und O.Ripke, Lessons Learned from Streets, 2008].

Der Erfindung liegt die Aufgabe zugrunde, ein Additiv zur Verwendung für Bitumenmassen, insbesondere für Straßenbeläge aus Asphalt, anzugeben, das die beschriebenen Nachteile nicht zeigt und das die Probleme der Spurrinnen bei Hitze und der Risse bei Kälte verringert oder vermeidet.

Diese Aufgabe wird mittels eines Additivs gemäß Anspruch 1 gelöst. Das Additiv liegt somit in Pelletform vor und hat die folgende Zusammensetzung:
wenigstens 15 % Cellulosefasern
wenigstens 40 % Gummipartikel
wenigstens 5 % Wachs
wenigstens 1,5 % eines Aktivators.

Die restlichen Bestandteile können Bitumen oder weitere Additive für Bitumenmassen sein.

Eine Schlüsselfunktion hat die Kombination aus Cellulosefasern und Wachs. Cellulosefasern in Verbindung mit Wachs sind entscheidend für den Aufbau von formstabilen, rieselfähigen und dosierbaren Pellets, die auch in Verbindung mit Gummipartikeln nicht zur Verklumpung neigen. Dabei kommt es vor allem auf den genannten relativ hohen Anteil von Cellulosefasern an.

Eine weitere Schlüsselfunktion übernimmt die Kombination aus Gummipartikel, Aktivator und Bitumen. Der Aktivator stellt eine chemische Verbindung zwischen den Inhaltstoffen des Gummis und dem Bitumen her, so dass ein polymeres Netzwerk entsteht. Überraschenderweise erfolgt diese Vernetzung und Aktivierung durch intensive Wechselwirkung der gewählten Reaktionspartner schon in einem einzigen und einfachen Arbeitsschritt, im Pelletierprozess.

Die Cellulosefasern sind ungefähr 0,01 - 6 mm lang. Vorteilhafter ist jedoch eine durchschnittliche Länge der Faser, die im Bereich von 0,5 - 3 mm liegt. Neben ausgewählten Cellulosefasern wie z.B. Papier-, Jute-, Hanf-, Sisal-, Flachs-, Stroh-, Textil- und/oder Holzfasern, sind auch Kunstfasern wie z.B. Polyolefine einsetzbar. Neben organischen Fasern sind auch anorganische Fasern wie z.B. Glasfasern einsetzbar.

Die Gummipartikel bestehen aus Partikelgrößen mit einer Korngrößenverteilung zwischen 0,05 - 5 mm, bevorzugt 0,2 - 1,4 mm, die bevorzugt bei Umgebungstemperatur durch mechanische Verfahren aus Altreifen gewonnen werden, wobei Fremdstoffe sowie Stahl- und Gewebefasern durch magnetische und mechanische Verfahren abgetrennt sind.

Als Wachs kommen in Betracht viskositätsreduzierende Wachse, vorzugsweise Fischer-Tropsch-Wachse, und als Aktivator vorzugsweise Polyoctenamer.

Das genannte Additiv wird dem Straßenbau-Mischgut zugegeben. Das Straßenbau-Mischgut umfasst im Allgemeinen ca. 90 oder mehr Prozent Gestein sowie ca. 5 bis 7 Prozent Bitumen. Der Anteil des genannten Additivs beträgt in der Regel ca. 1 Prozent. Alle Angaben sind in Gewichtsprozent zu verstehen.

Ein einzelnes Feld gemäß der Erfindung umfasst wohlgemerkt sämtliche der genannten Komponenten.

Die einzelnen Komponenten erbringen die folgenden Vorteile:
- Die Cellulosefasern sorgen für die notwendige Stabilisierung bituminöser Massen, d.h. eine Entmischung des Mischguts durch das sog. Ablaufen des Bindemittels wird verhindert.
- Wachs steigert einerseits die Pelletierfähigkeit; in Zusammenwirkung mit den Fasern wird der Pelletierprozess abgekürzt und das Produkt damit kostengünstig gemacht. Außerdem begünstigen Cellulosefasern in Verbindung mit Wachs den Zerfallprozess der Pellets in bituminösen Massen.
- Geeignete Gummianteile sorgen für die notwendige Bitumenmodifikation. Man erreicht eine vorteilhafte Elastomermodifizierung des Bitumens bzw. der jeweiligen Rezeptur. Mit der Zugabe von diesem Compound im Asphalt werden ähnliche Eigenschaften wie die im polymermodifizierten Mischgut erzielt.
- Organische Verbindungen wie z. B. Bitumen und Wachse steuern einerseits zielgerichtet das "Auflöseverhalten" der Compounds bei der Asphaltmischgutherstellung. Unter "Auflöseverhalten" oder "Zerfallprozess" versteht man, dass die im Compound enthaltenen in Bitumen löslichen Anteile wie z.B. Bitumen und Wachse bei den üblichen Mischguttemperaturen erweichen und/oder schmelzen, so dass die Compounds unter gleichzeitiger Anwendung von für Bitumenapplikationen üblichen Scherkräften zerfallen, alle Compoundbestandteile werden in unmittelbarer Folge vereinzelt und können sich dadurch in ihrer Wirkung voll entfalten. Andererseits sorgen die organischen Verbindungen wie z. B. Bitumen und Wachse für eine besonders gute Pelletierbarkeit bei der Herstellung der Compounds in der Darreichungsform als Pellet.
- Weitere Komponenten sorgen für eine Aktivierung der Gummipartikel. Besonders vorteilhaft ist die Verwendung von Polyoctenamer. Dieser Aktivator und Verlinker stellt eine chemische Verbindung zwischen den Inhaltstoffen des Gummis und dem Bitumen her, so dass ein polymeres Netzwerk entsteht. Es ist hierzu nicht notwendig, den Gummi durch hohe Scherkräfte mechanisch zu aktivieren. Die Aktivierung erfolgt über das Vernetzungsmittel direkt beim Pelletierprozess - einfach und in nur einem Arbeitsschritt. Durch die Gesamtheit der Komponenten des erfindungsgemäßen Additivs werden zusätzliche positive Modifikationen in bituminösen Massen erreicht. Viskositätsverändernde Wachse z.B. senken die Viskosität des Bindemittels im Verarbeitungstemperaturbereich. Einerseits wird dadurch eine Vereinfachungen für Einbau und Verdichtung von Asphaltmischgut ermöglicht. Andererseits ist bei Verwendung viskositätsverändernder Wachse auch eine Temperaturabsenkung bei der Mischgutherstellung möglich. Dies hat erniedrigenden Energieverbrauch und ein reduziertes Risiko der Bindemittelalterung in der Misch- und Einbauphase zur Folge. Viskositätsverändernde Wachse z.B. erhöhen die Bindemittelsteifigkeit im oberen Gebrauchstemperaturbereich, der Widerstand gegen irreversible Asphaltverformungen im Sommer wird dadurch erhöht und Spurrinnenbildungen werden minimiert.
- Es hat sich somit gezeigt, dass Fasern in Verbindung mit Wachs höchst wirksam für den Aufbau des einzelnen Pellets sind. Gummipartikel alleine lassen sich aufgrund fehlender Kompressibilität nicht oder nur schwer zu einem Pellet in dosierbarer Form formen. Man könnte sagen, dass Fasern als Trägerstoffe dienen und eine Art Pelletierhilfsmittel darstellen. Die anderen Bestandteile der Pellets, vor allem die Gummipartikel, lagern sich willig an die Fasern an. Dadurch kann die Herstellung des Compounds in der angegebenen Zusammensetzung in nur einem einfachen und kontinuierlichen Arbeitsprozess kostengünstig erfolgen.

Weiterhin ergeben sich folgende Vorteile:
Nach dem Zugeben der Pellets zum Straßenbau-Mischgut - umfassend Mineralstoffe und Bitumen - tritt im Mischer bei Vorliegen von Scherkräften und erhöhter Temperatur ein Prozess der Dispergierung der Pellets und des "Auflösens" auf. Dies bedeutet, dass sich die Pellets gut und homogen im Straßenbaumischgut verteilen und sich die schmelzbaren Pelletbestandteile bei der genannten Bearbeitung des Mischgutes leicht auflösen und dass somit eine Verteilung aller Komponenten des Compounds stattfindet. Diese Verteilung ist eine gleichmäßige. Bedingt durch die homogene Einarbeitbarkeit der Pellets und das hohe "Auflöseverhalten" im Straßenbau-Mischgut kann auf eine zeitaufwändige und zusätzliche Trockenvormischzeit, d.h. ein Vormischen mit den heißen Mineralstoffen vor der Bitumenzugabe, in der Regel verzichtet werden. Ein "Auflösen" findet bereits bei Temperaturen ab 100° C statt. Auch nachfolgende Reaktionszeiten bzw. Nachreifezeiten des Straßenbaumischgutes sind bei Verwendung dieses Additivs nicht mehr notwendig.

## Patentansprüche

1. Pelletförmiges, Bitumen enthaltendes, sich in Bitumenmassen ab 100 °C auflösendes Additiv, insbesondere für die Herstellung von Straßenbelägen,
umfassend:
wenigstens 15 % Cellulosefasern
wenigstens 40 % Gummipartikel
wenigstens 5 % Wachs
wenigstens 1,5 % eines Aktivators zum chemischen Vernetzen von Bitumen und
Gummi,
alle Angaben in Gewichtsprozent.

2. Pelletförmiges Additiv nach Anspruch 1, **dadurch gekennzeichnet, dass** die Cellulosefasern ungefähr 0,01 - 6 mm lang sind.

3. Pelletförmiges Additiv nach Anspruch 1, **dadurch gekennzeichnet, dass** die Cellulosefasern ungefähr 0,5 - 3 mm lang sind.

4. Pelletförmiges Additiv nach Anspruch 1, **dadurch gekennzeichnet, dass** dieses als weitere Bestandteile anorganische oder organische Fasern enthält.

5. Pelletförmiges Additiv nach Anspruch 1, **dadurch gekennzeichnet, dass** die Gummipartikel aus Partikelgrößen mit einer Korngrößenverteilung zwischen 0,05 - 5 mm bestehen.

6. Pelletförmiges Additiv nach Anspruch 1, **dadurch gekennzeichnet, dass** die Gummipartikel aus Partikelgrößen mit einer Korngrößenverteilung zwischen 0,2 - 1,4 mm bestehen.

7. Pelletförmiges Additiv nach Anspruch 1, **dadurch gekennzeichnet, dass** dieses auch Polymere wie Plastomere, Elastomere, Duroplaste, funktionelle organische Additive wie z.B. Haftvermittler oder Wachse oder anorganische Additive wie z. B. Zeolithe im Produkt enthält.

8. Pelletförmiges Additiv nach einem oder mehreren der vorausgegangenen Ansprüche, **dadurch gekennzeichnet, dass** die Differenz zu 100 % aus Gummipartikeln oder Cellulosefasern oder aus beliebigen Anteilen von Cellulosefasern und Gummipartikeln oder Wachs oder einem Aktivator besteht.

## Claims

1. A pellet-shaped additive which contains bitumen and dissolves in bitumen compounds from 100°C, especially for the production of road surfaces, comprising
at least 15% of cellulose fibres,
at least 40% of rubber particles,
at least 5% of wax,
at least 1.5% of an activator for chemically cross-linking bitumen and rubber,
with all specifications made in percent by weight.

2. A pellet-shaped additive according to claim 1, **characterized in that** the cellulose fibres are approximately 0.01 to 6 mm long.

3. A pellet-shaped additive according to claim 1, **characterized in that** the cellulose fibres are approximately 0.5 to 3 mm long.

4. A pellet-shaped additive according to claim 1, **characterized in that** it contains inorganic or organic fibres as further components.

5. A pellet-shaped additive according to claim 1, **characterized in that** the rubber particles consist of particle sizes with a grain size distribution of between 0.05 to 5 mm.

6. A pellet-shaped additive according to claim 1, **characterized in that** the rubber particles consist of particle sizes with a grain size distribution of between 0.2 to 1.4 mm.

7. A pellet-shaped additive according to claim 1, **characterized in that** it also contains polymers such as plastomers, elastomers, thermosets, functional organic additives such as bonding agents or waxes or inorganic additives such as zeolites in the product.

8. A pellet-shaped additive according to one or several of the preceding claims, **characterized in that** the difference consists to 100% of rubber particles or cellulose fibres or random proportions of cellulose fibres and rubber particles or wax or an activator.

## Revendications

1. Additif sous forme de pastilles, contenant du bitume et se dissolvant dans les masses bitumineuses à partir de 100 °C, en particulier pour la fabrication de revêtements de chaussée, contenant
au moins 15 % de fibres de cellulose,
au moins 40 % de particules de caoutchouc,
au moins 5 % de cire,
au moins 1,5 % d'un activateur pour la réticulation chimique du bitume et du caoutchouc,
le tout en pourcentage du poids.

2. Additif sous forme de pastilles selon la revendication 1, **caractérisé en ce que** les fibres de cellulose sont longues d'environ 0,01 à 6 mm.

3. Additif sous forme de pastilles selon la revendication 1, **caractérisé en ce que** les fibres de cellulose sont longues d'environ 0,5 à 3 mm.

4. Additif sous forme de pastilles selon la revendication 1, **caractérisé en ce qu'**il contient, comme autres composants, des fibres inorganiques ou organiques.

5. Additif sous forme de pastilles selon la revendication 1, **caractérisé en ce que** les particules de caoutchouc se composent de particules ayant une répartition granulométrique de 0,05 à 5 mm.

6. Additif sous forme de pastilles selon la revendication 1, **caractérisé en ce que** les particules de caoutchouc se composent de particules ayant une répartition granulométrique de 0,2 à 1,4 mm.

7. Additif sous forme de pastilles selon la revendication 1, **caractérisé en ce que** le produit contient aussi des polymères tels que des plastomères, des élastomères, des matières plastiques thermodurcissables, des additifs organiques fonctionnels tels que des activateurs d'adhérence ou des cires ou des additifs inorganiques tels que des zéolithes.

8. Additif sous forme de pastilles selon une ou plusieurs des revendications précédentes, **caractérisé en ce que** la différence par rapport à 100 % se compose de particules de caoutchouc ou de fibres de cellulose ou de proportions quelconques de fibres de cellulose et de particules de caoutchouc ou de cire ou d'un activateur.
